# EUROPÄISCHE PATENTANMELDUNG

(11) **EP 2 322 962 A1**
(43) Veröffentlichungstag der Anmeldung: **18.05.2011**
(21) Anmeldenummer: 09405199.2
(22) Anmeldetag: 17.11.2009
(51) Int. Cl.: G02B 6/00

(54) **Dekorelement mit einem Lichtleiter**

(71) Anmelder: Weidmann Plastics Technology AG, 8640 Rapperswil (CH)
(72) Erfinder: Die Erfindernennung liegt noch nicht vor
(74) Vertreter: Groner, Manfred

(57) **Zusammenfassung**

Das Dekorelement weist einen Körper auf, welcher dem Transport von Licht dient und in dem eingekoppeltes Licht wenigstens einmal die Fortpflanzungsrichtung ändert und in dem das eingekoppelte Licht in einem beleuchtbaren Bereich (25, 38, 47, 77) ausgekoppelt wird. Zum Einkoppeln des Lichtes ist ein Leuchtmittel (13, 27, 43, 74), beispielsweise eine LED vorgesehen. Der Lichtleiter (9, 24, 35, 42, 72) ist ein Spritzgussteil, der an wenigstens einem Teilbereich des Leuchtmittels (13, 27, 43, 74) und/oder an einem Abdeckteil (3, 22, 33, 41, 54) oder an einem Diffusor (7) angespritzt ist. Das Dekorelement kann sehr kostengünstig weitgehend im Spritzgussverfahren hergestellt werden. Durch das Anspritzen des Lichtleiters (13, 27, 43, 74) am Leuchtmittel (13, 27, 43, 74) und/oder an einem Abdeckteil (3, 22, 33, 41, 54) oder an einem Diffusor können Zwischenräume und damit ein Lichtverlust verringert werden, so dass ein Bereich (25, 38, 47, 77) effizienter beleuchtbar ist.

## Beschreibung

Die Erfindung betrifft ein Dekorelement mit einem Lichtleiter, der einen Körper aufweist, welcher dem Transport von Licht dient und in dem eingekoppeltes Licht wenigstens einmal die Fortpflanzungsrichtung in einer vorbestimmten Richtung ändert und in dem eingekoppeltes Licht in einem beleuchtbaren Bereich des Dekorelementes ausgekoppelt wird, mit einem Leuchtmittel, mit dem Licht in den Lichtleiter einkoppelbar ist. Das Licht verlässt somit das Dekorelement im beleuchtbaren Bereich.

Ein Dekorelement dieser Art ist im Stand der Technik aus der US 4,965,950 bekannt geworden. Dieses dient als Anzeige an einem Kraftfahrzeug. Zur Beleuchtung eines Feldes, beispielsweise eines Symbols, wird Licht an Schmalseiten des Lichtleiters in diesen eingekoppelt. Das Licht wird durch mehrere Leuchtdioden erzeugt, die in einem Gehäuse des Dekorelementes befestigt sind. Auf diesem Gehäuse ist ebenfalls der Lichtleiter montiert. Das in den Lichtleiter eingekoppelte Licht wird an einer Rückseite des Lichtleiters reflektiert und gegen den zu beleuchtenden Bereich gerichtet. Die Herstellung eines solchen Dekorelementes ist vergleichsweise aufwendig, da die Leuchtdioden und auch der Lichtleiter im Gehäuse montiert werden müssen. Bei einer ungenauen Positionierung des Lichtleiters und der Leuchtdioden ist ein erheblicher Lichtverlust möglich.

Die DE-U-20 2004 008 681 offenbart ebenfalls ein Dekorelement. Dieses ist für einen lichtführenden Aufbau für die Bodenwannenkante in Automobilen vorgesehen. Der Lichtleiter ist eine längliche Platte, in welche mit Mikro-LED-Dioden an Schmalseiten Licht eingekoppelt wird. Das Licht wird an einer lichtreflektierenden mattierten Oberfläche umgelenkt und gegen eine beleuchtbare Schrift gerichtet. Das Dekorelement besitzt zudem als Diffusor einen Dispersionsfilm, welcher zwischen dem Lichtleiter und einer transparenten Platte angeordnet ist. Die transparente Platte weist eingebettete Bruchstapel auf, welche in Löcher einer opaken Platte eingesetzt sind. Um das Eindringen von Wasser zu vermeiden, ist zudem an der Rückseite des Dekorelementes eine Abdichtschale vorgesehen, welche mit Kieselgel gegenüber der genannten opaken Platte abgedichtet ist. Auch dieses Dekorelement ist in der Herstellung vergleichsweise teuer und aufwendig.

Die DE-A-10 2004 029 248 offenbart ein Abdeckungsbauteil für ein Beleuchtungssystem. Dieses besitzt einen transparenten Körper, in den mittels einer Diode Licht eingekoppelt wird. Das Licht tritt ohne Umlenkung aus diesem transparenten Körper aus. Dieser Körper bildet keinen eigentlichen Lichtleiter, da das Licht beim Durchtritt durch den transparenten Körper seine Richtung nicht ändert. Ein Lichtleiter im Sinn der vorliegenden Anmeldung ist ein solcher, bei dem wenigstens ein Teil des in den Lichtleiter eingekoppelten Lichtes in diesem wenigstens einmal die Fortpflanzungsrichtung ändert und in einem beleuchtbaren Bereich ausgekoppelt wird. Für die Umlenkung des Lichtes ist ein reflektierender Bereich vorgesehen. Dieser kann durch eine Struktur, beispielsweise eine Mikrostruktur oder auch durch eine reflektierende Folie oder dergleichen gebildet sein.

Der Erfindung liegt die Aufgabe zugrunde, ein Dekorelement der genannten Gattung zu schaffen, das noch einfacher herstellbar und dennoch funktionssicher ist. Es soll insbesondere eine Herstellung in grossen Serien möglich sein. Die Funktionssicherheit soll auch dann gewährleistet sein, wenn das Dekorelement aggressiven Umwelteinflüssen ausgesetzt ist, beispielsweise bei einer Anwendung im Automobilbau.

Die Aufgabe ist gemäss Anspruch 1 dadurch gelöst, dass der Lichtleiter ein Spritzgussteil ist, das an wenigstens einem Teilbereich des Leuchtmittels und/oder an einem Abdeckdeckteil und/oder einem Diffusor angespritzt ist. Das Dekorelement kann sehr kostengünstig weitgehend im Spritzgussverfahren hergestellt werden. Durch das Anspritzen des Lichtleiters an das Leuchtmittel und/oder an ein Abdeckteil und/oder an einen Diffusor können Zwischenräume und damit ein Lichtverlust verringert werden, so dass ein Bereich effizienter beleuchtbar ist. Das Anspritzen des Lichtleiters an das Leuchtmittel hat den weiteren Vorteil, dass die Positionierung des Leuchtmittels bezüglich des Lichtleiters exakter und einfacher möglich ist. Zudem erübrigt sich eine aufwendige separate Befestigung des Leuchtmittels in einem Gehäuse. Durch das Anspritzen des Lichtleiters an das Abdeckteil und/oder einen Diffusor kann der Aufwand für die Herstellung ebenfalls verringert und die Herstellung vereinfacht werden.

Nach einer Weiterbildung der Erfindung ist vorgesehen, dass das Dekorelement wenigstens ein punktförmiges Leuchtmittel aufweist. Dieses Leuchtmittel ist beispielsweise eine Leuchtdiode, die auf einer Platine montiert ist. Der Lichtleiter ist wenigstens an dieses punktförmige Leuchtmittel angespritzt. Zwischen dem punktförmigen Leuchtmittel und dem Lichtleiter besteht dann somit kein Zwischenraum, und entsprechend ist im Wesentlichen kein Lichtverlust beim Einkoppeln des Lichtes durch das Leuchtmittel in den Lichtleiter zu erwarten. Grundsätzlich sind auch mehrere solche punktförmigen Leuchtmittel vorgesehen. Diese können beispielsweise auf einer Platine angeordnet sein. Anstelle einer Leuchtdiode sind auch andere Leuchtmittel, beispielsweise eine Elektrolumineszenzfolie, OLED oder eine Glühbirne denkbar.

Nach einer Weiterbildung der Erfindung ist vorgesehen, dass das Leuchtmittel vom Lichtleiter umspritzt ist. Vorzugsweise jedoch nicht zwingend, ist das Leuchtmittel vollständig umspritzt. Lediglich die zur elektrischen Speisung des Leuchtmittels vorgesehenen Anschlusskabel ragen dann aus dem Lichtleiter hinaus. Bevorzugt ist der Lichtleiter mindestens an der lichtemittierenden Oberfläche des Leuchtmittels angespritzt.

Nach einer Weiterbildung der Erfindung ist vorgesehen, dass das Leuchtmittel auf einem Träger, beispielsweise auf einer Platine befestigt ist und dieser Träger wenigstens teilweise in den Lichtleiter eingebettet ist. Das Leuchtmittel bildet mit dem Träger und gegebenenfalls einer Elektronik und Anschlusskabeln ein Beleuchtungsmodul. Dieses bildet eine Einheit, die wenigstens bereichsweise durch Anspritzen mit dem Lichtleiter verbunden ist. Vorzugsweise ist das gesamte Beleuchtungsmodul vom Lichtleiter umspritzt. Das Beleuchtungsmodul ist dann besonders sicher im Lichtleiter integriert, und damit gegen Umwelteinflüsse und insbesondere gegen Eindringen von Gasen, Flüssigkeiten, insbesondere von Wasser und Reinigungsmitteln geschützt. Der Lichtverlust beim Einkoppeln des Lichtes in den Lichtleiter kann minimal gehalten werden. Die Herstellung ist auch in grossen Serien vergleichsweise einfach, da lediglich das Beleuchtungsmodul im Spritzgusswerkzeug positioniert werden muss.

Nach einer Weiterbildung der Erfindung ist vorgesehen, dass das Leuchtmittel mit wenigstens einem Positionierelement, beispielsweise einem Positionierstift verbunden ist. Mit diesem Positionierelement wird das Leuchtmittel bzw. das Beleuchtungsmodul im Spritzgusswerkzeug positioniert. Nach einer Weiterbildung ist vorgesehen, dass das wenigstens eine Positionierelement ein Teil eines weiteren Spritzgussteils ist. Dieses weitere Spritzgussteil ist beispielsweise ein plattenförmiger Diffusor. Wird dieser im Spritzgusswerkzeug gespritzt, so wird gleichzeitig wenigstens ein Positionierteil, beispielsweise ein Positionierstift an diesem Diffusor angespritzt. Das Leuchtmittel bzw. das Beleuchtungsmodul kann dann im Spritzgusswerkzeug auf diesem Positionierteil aufgesteckt werden. Anschliessend wird dann der Lichtleiter gespritzt. Dies kann im gleichen Spritzgusswerkzeug oder selbstverständlich auch in einem anderen Spritzgusswerkzeug erfolgen. Das Positioniermittel kann aber auch ein Stift sein, der im Spritzgusswerkzeug befestigt wird und der dann im Lichtleiter verbleibt. Zum Positionieren des Leuchtmittels bzw. des Beleuchtungsmoduls ist aber auch eine Vertiefung im Spritzgusswerkzeug möglich. Das Leuchtmittel bzw. das Beleuchtungsmodul wird dann vor dem Spritzen des Lichtleiters in diese Ausnehmung eingesetzt. Der Diffusor kann auch durch das Abdeckteil gebildet sein. Zudem kann das Positioniermittel für das Beleuchtungsmodul an der Abdeckung angespritzt sein.

Der Lichtleiter ist gemäss einer Weiterbildung der Erfindung direkt an den Abdeckteil angespritzt. Der Lichtleiter kann aber auch am Diffusor angespritzt sein, der dann wiederum am Abdeckteil befestigt, beispielsweise ebenfalls angespritzt ist. Der Abdeckteil wird bei der Herstellung des Dekorelementes in das Spritzgusswerkzeug eingelegt oder im Spritzgusswerkzeug gespritzt. Anschliessend wird der Diffusor oder der Lichtleiter am Abdeckteil angespritzt. Das beleuchtbare Feld bzw. der beleuchtbare Bereich wird beispielsweise durch Durchbrüche im Abdeckteil gebildet. Der Diffusor bzw. der Lichtleiter können diese Durchbrüche ausfüllen. Der beleuchtbare Bereich kann aber auch durch bereichsweise transparente Bereiche des Abdeckteils gebildet werden. Durchbrüche sind dann nicht erforderlich.

Nach einer Weiterbildung der Erfindung weist das Dekorelement ein Gehäuse auf, das vorzugsweise ebenfalls ein Spritzgussteil ist. Das Gehäuse ist insbesondere an den Lichtleiter und an den Abdeckteil und gegebenenfalls auch an den Diffusor angespritzt. Damit ist eine sichere Abdichtung, insbesondere gegen das Eindringen von Wasser gewährleistet. Das Dekorelement kann dann somit weitgehend im Spritzgussverfahren hergestellt werden. Dies ermöglicht eine sehr kostengünstige Herstellung grosser Serien.

Beispielsweise können der Diffusor, der Lichtleiter und das Gehäuse als Modul im Spritzgussverfahren hergestellt werden. Das Modul muss dann lediglich an der Abdeckung befestigt werden.

Das Dekorelement ist beispielsweise ein Element für ein Kraftfahrzeug, beispielsweise eine Einstiegsleiste, Mittelkonsole oder auch eine Anzeige im Innenraum des Kraftfahrzeugs. Denkbar ist auch eine Ausbildung des Dekorelementes als Schalter oder auch lediglich als Schaltertaste. Denkbar sind auch Anwendungen der Erfindung für beleuchtbare Elemente, beispielsweise für Haushaltgeräte, beispielsweise Kühlschränke, Dampfgarer, Waschmaschinen, Backöfen, Kochherde, Geschirrspülmaschinen oder Möbel und dergleichen.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Fig. 1: ein Schnitt durch ein erfindungsgemässes Dekorelement entlang der Linie I-I der Fig. 2,
- Fig. 2: eine Ansicht des Dekorelementes nach Fig. 1,
- Fig.3 3: ein Schnitt durch eine Variante eines erfindungsgemässen Dekorelementes entlang der Linie III-III der Fig. 4,
- Fig. 4: eine Ansicht der Frontseite des Dekorelementes gemäss Fig. 3,
- Fig. 5: eine räumliche Ansicht einer weiteren Variante eines erfindungsgemässen Dekorelementes,
- Fig. 6: ein Schnitt durch ein Dekorelement nach einer weiteren Variante,
- Fig. 7: ein durch einen Teil eines Spritzgusswerkzeuges zur Erläuterung wesentlicher Verfahrensschritte und
- Fig.8: ein Schnitt durch eine weitere Variante eines erfindungsgemässen Dekorelementes.

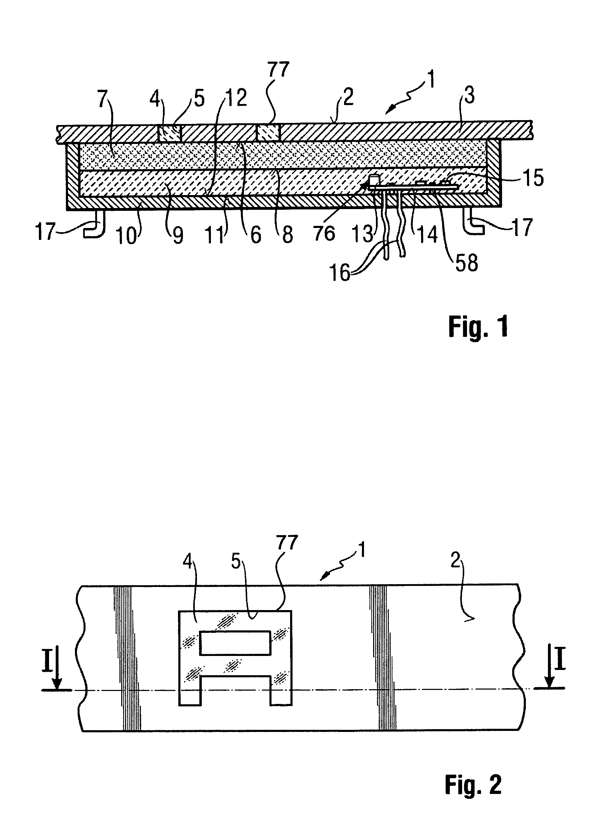

Das in den Fig. 1 und 2 gezeigte Dekorelement 1 bildet eine üblicherweise sichtbare Frontseite 2, die von einem flächigen Abdeckteil 3 gebildet wird. Das Abdeckteil 3 ist beispielsweise ein Metallblech, das eben, geprägt oder sonst wie verformt sein kann. Es kann jedoch auch aus einem anderen geeigneten Werkstoff, beispielsweise aus Kunststoff oder Holz hergestellt sein. Eine oder mehrere Öffnungen 5 im Abdeckteil 3 bilden einen beleuchtbaren Bereich 77, der ein Symbol, einen Buchstaben, eine Zahl oder ein Ornament oder dergleichen darstellt. Die Öffnung 5 kann von einem transparenten Teil 4 verschlossen sein, der auch als Diffusor ausgebildet sein kann. Ausserhalb des beleuchtbaren Bereichs 77 ist der Abdeckteil 3 vorzugsweise opak. Der Teil 4 kann auch ein integraler Bereich des Abdeckteils 3 sein. Er kann zudem ein Teil eines Diffusors 7 oder eines Lichtleiters 9 sein. Diese beiden Teile 7 und 9 werden weiter unten näher erläutert.

Der Abdeckteil 3 besitzt eine vorzugsweise ebene Rückseite 6, an welcher ein Gehäuse 10 befestigt ist. Das Gehäuse 10 ist vorzugsweise ein Spritzgussteil aus Kunststoff, das an der Rückseite 6 des Abdeckteils 3 angespritzt ist. Denkbar ist hier jedoch auch eine mechanische Verbindung beispielsweise eine Rastverbindung zwischen dem Abdeckteil 3 und dem Gehäuse 10. An einer Aussenseite des Gehäuses 10 können Verbindungsteile 17, beispielsweise Rastzungen befestigt sein, mit denen das Dekorelement 1 an einem hier nicht gezeigten Teil, beispielsweise an einer Karosserie oder einer Wandung eines Gerätes befestigt ist. Die Verbindungsteile 17 können beispielsweise angespritzt sein. Denkbar ist hier jedoch auch eine mechanische Befestigung der Verbindungsteile 17 am Gehäuse 10.

Innerhalb des Gehäuses 10 ist der oben bereits erwähnte Lichtleiter 9 gelagert, der beispielsweise plattenförmig ausgebildet und ein Spritzgussteil aus einem transparenten oder transluszenter Kunststoff ist. Zwischen dem Lichtleiter 9 und dem Abdeckteil 3 ist der Diffusor 7 angeordnet, der ebenfalls beispielsweise plattenförmig ausgebildet und flächig an der Rückseite 6 des Abdeckteils 3 anliegt. Der Diffusor ist ein Filter, welcher das vom Lichtleiter 9 aufgenommene Licht vergleichmässigt und den beleuchtbaren Bereich 77 ausleuchtet. Der Diffusor 7 ist ebenfalls vorzugsweise ein Spritzgussteil und an der Rückseite 6 am Abdeckteil 3 angespritzt. Der Diffusor 7 könnte an sich weggelassen werden, insbesondere dann, wenn der Abdeckteil 3 im Bereich des beleuchtbaren Bereiches 77 selbst ein Diffusor bildet. Der Diffusor 7 kann auch als vergleichsmässig dünne Folie ausgebildet sein, welche an der Rückseite 6 des Abdeckteils 3 anliegt. Optische Diffusoren sind dem Fachmann an sich in sehr vielen Ausführungen bekannt und brauchen deshalb hier nicht näher erläutert zu werden.

Wie die Fig. 1 zeigt, ist in den Lichtleiter 9 ein Beleuchtungsmodul 76 eingebettet, das einen Träger 14, beispielsweise eine Leiterplatte, ein Leuchtmittel 13, eine Elektronik 15 sowie für die Stromversorgung Anschlusskabel 16 aufweist. Das Leuchtmittel 13 ist beispielsweise eine LED, die ein punktförmiges Licht abgibt. Auf den Träger 14 können auch mehrere solche Leuchtmittel 13 angeordnet sein. Zudem ist eine Ausführung denkbar, bei welcher in den Lichtleiter 9 mehrere gleiche oder unterschiedliche Beleuchtungsmodule 76 eingebettet sind. Das Beleuchtungsmodul 76 ist vom Lichtleiter 9 umspritzt, so dass lediglich noch die beiden Anschlusskabel 16 aus diesem herausragen. Wird an die Anschlusskabel 16 eine Spannung angelegt, so erzeugt das Leuchtmittel 13 ein Licht, das ohne Zwischenraum direkt in den Lichtleiter 9 einstrahlt. Da das Beleuchtungsmodul 76 vom Lichtleiter 9 umspritzt ist, ist dieses ohne weitere Befestigungsmittel in diesem fest angeordnet und positioniert. Der Träger 14 ist mit einem oder mehreren Positionierstiften 58 verbunden. Diese dienen lediglich für die Positionierung des Beleuchtungsmoduls 76 beim Spritzen des Lichtleiters 9. Die Positionierstifte 58 dienen dazu, das Beleuchtungsmodul 76 im hier nicht gezeigten Spritzgusswerkzeug zu positionieren. Die Positionierstifte 58 können alternativ auch angespritzte Teile des Diffusors 7 oder des Abdeckteils 3 sein. Beim Spritzen bzw. Herstellen des Abdeckteils 3 bzw. des Diffusors 7 werden dann solche Stifte hergestellt. Das Beleuchtungsmodul 76 kann auf diese angespritzten Stifte aufgesetzt, insbesondere aufgesteckt werden. Das Beleuchtungsmodul 76 ist dann im Spritzgusswerkzeug positioniert. Separate Positioniermittel sind in diesem Fall nicht erforderlich. Das Beleuchtungsmodul 76 kann gemäss einer anderen Variante auch in einer Vertiefung des Spritzgusswerkzeuges positioniert werden. Das Beleuchtungsmodul 76 ist dann lediglich teilweise mit dem Lichtleiter 9 verbunden. Wesentlich ist jedoch, dass der Lichtleiter 9 wenigstens an dem punktförmigen Leuchtmittel 13 angespritzt ist.

Der Lichtleiter 9 besitzt eine Rückseite 11, an welcher das Gehäuse 10 anliegt.

Vorzugsweise ist das Gehäuse 10 an diese Rückseite 11 angespritzt. Eine Innenseite 12 des Gehäuses 10 ist dann somit im Spritzguss mit dem Lichtleiter 9 verbunden. Eine solche Verbindung besteht vorzugsweise auch zwischen dem Lichtleiter 9 und einer Rückseite 8 des Diffusors 7. Vorzugsweise sind der Diffusor 7, der Lichtleiter 9 und das Gehäuse 10 im Spritzguss hergestellt. Dadurch ergibt sich ein sehr kompaktes und platzsparendes Dekorelement 1, das zudem ohne die Verwendung von weiteren Dichtungsmitteln vor allem gegen das Eindringen von Wasser sehr dicht ist.

Die Rückseite 11 des Lichtleiters 9 kann mit einer hier nicht gezeigten Struktur, beispielsweise einer Mikrostruktur versehen sein, welche das vom Leuchtmittel 13 eingekoppelte Licht reflektiert und damit den Bereich 77 ausleuchtet. Das Licht ändert somit die Fortpflanzungsrichtung an den Reflexionsflächen 30. Alternativ zu einer solchen Struktur könnte auch zwischen dem Gehäuse 10 und dem Lichtleiter 9 eine hier nicht gezeigte reflektierende Folie angeordnet sein. Es sind hier aber auch andere Mittel denkbar, mit denen das eingekoppelte Licht umgelenkt werden kann.

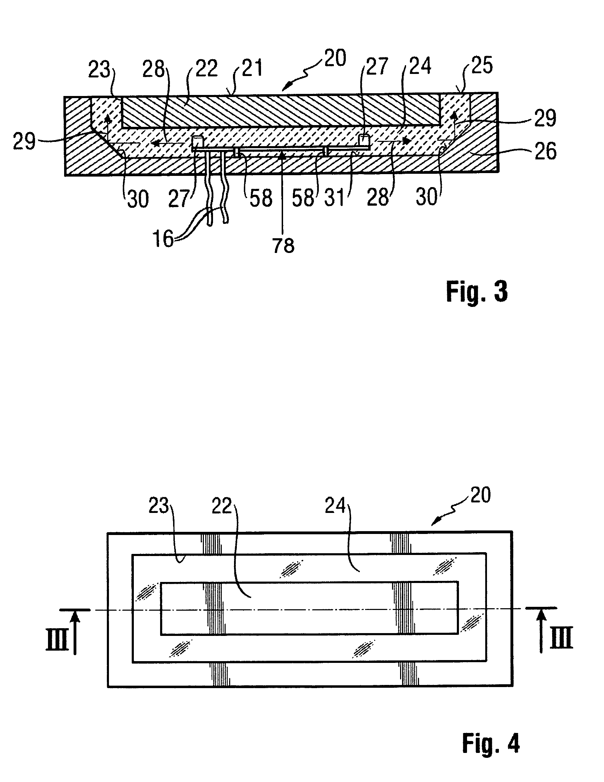

Die Fig. 3 und 4 zeigen ein Dekorelement 20, das grundsätzlich wie das Dekorelement 1 aufgebaut ist. Es besitzt eine Frontseite 21, die durch ein Abdeckteil 22, einen Lichtleiter 24 sowie ein Gehäuse 26 gebildet ist. Der Lichtleiter 24 bildet an der Frontseite 21 einen beleuchtbaren Bereich 25, der zwischen dem Abdeckteil 22 und dem Gehäuse 26 angeordnet ist. Der beleuchtbare Bereich 25 kann auch in diesem Fall an sich beliebig ausgebildet sein. Es sind auch mehrere solche Bereiche 25 denkbar. Zwischen dem Abdeckteil 22 und dem Gehäuse 26 befindet sich ein Fenster 23, in welches der Lichtleiter 24 eingreift und das von diesem ausgefüllt ist. An der Frontseite 21 kann der Lichtleiter 24 bündig, vertieft oder auch vorstehend sein.

In den Lichtleiter 24 ist ein Beleuchtungsmodul 78 eingebettet, das mit Positionierstiften 58 verbunden ist und das punktförmige Leuchtmittel 27 besitzt. Diese Leuchtmittel 27 sind mit Anschlusskabeln 16 verbunden, die nach aussen führen. Das von den Leuchtmitteln 27 in Richtung der Pfeile 28 ausgesendete Licht wird an Reflexionsflächen 30 umgelenkt und in Richtung der Pfeile 29 zum beleuchteten Bereich 25 umgelenkt und an diesem Bereich ausgekoppelt. Das Licht ändert somit die Fortpflanzungsrichtung an den Reflexionsflächen 30. Die Reflexionsflächen 30, die geneigt zur Frontseite 21 verlaufen, können beispielsweise durch Mikrostrukturen oder durch geeignete hier nicht gezeigte Folien reflektierend sein.

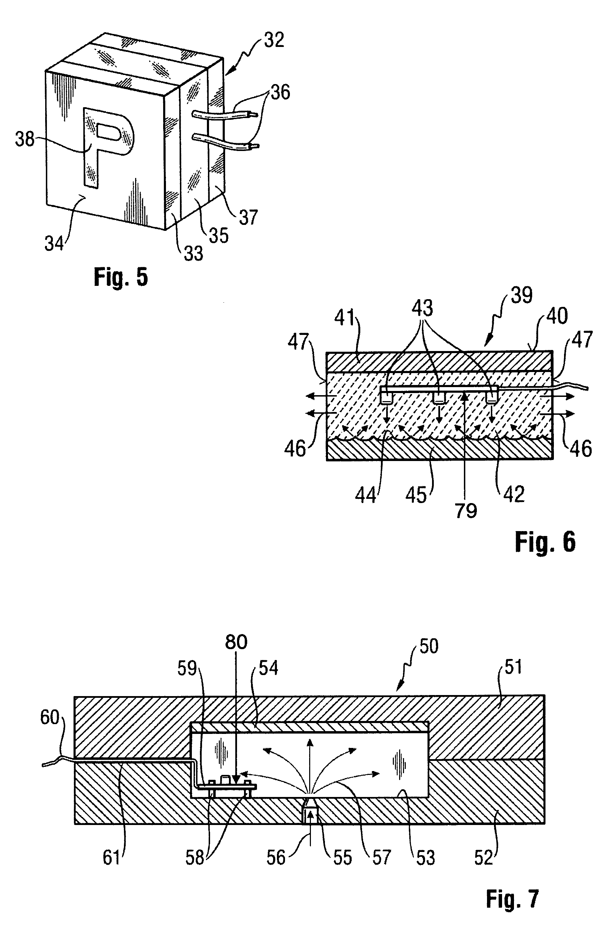

Die Fig. 5 zeigt ein Dekorelement 32, das beispielsweise ein Taste für einen Schalter bildet und eine Frontseite 34 aufweist, die einen beleuchtbaren Bereich 38 aufweist. Dieser Bereich 38 stellt beispielsweise einen Buchstaben dar. Dieser befindet sich innerhalb eines Abdeckteils 33. Bezüglich der Ausführung dieses Abdeckteils 33 und auch der anderen grundsätzlichen Merkmale wird auf die obigen Ausführungen verwiesen. Zwischen dem Abdeckteil 33 und einem Gehäuse 37 ist ein Lichtleiter 35 angeordnet, in welchem ein Beleuchtungsmodul eingebettet ist, von dem hier lediglich die herausragenden Anschlusskabel 36 sichtbar sind. Das Gehäuse 37 ist hier ein plattenförmiger Teil, der vorzugsweise an den Lichtleiter 35 angespritzt ist. Das Gehäuse 37 könnte jedoch den Lichtleiter 35 auch vollständig oder teilweise umgreifen. Das Gehäuse 37 könnte zudem am Abdeckteil 33 angespritzt sein. Der Lichtleiter 35 und vorzugsweise auch das Gehäuse 37 sind vorzugsweise Spritzgussteile.

Die Fig. 6 zeigt ein Dekorelement 39, das ein Abdeckteil 41 aufweist, welches eine Frontseite 40 bildet. Zwischen diesem Abdeckteil 41 und einem Gehäuse 45 ist ein Lichtleiter 42 angeordnet. In diesen Lichtleiter ist ein Beleuchtungsmodul 79 eingebettet, das mehrere nach unten gerichtete punktförmige Leuchtmittel 43 aufweist. Das von dem Leuchtmittel 43 in den Lichtleiter 42 eingekoppelte Licht wird an einer Mikrostruktur 44 reflektiert, welche das Licht gegen einen beleuchtbaren Bereich 47 oder mehrere solche Bereiche umlenkt. An diesem Bereich 47 wird das Licht gemäss den Pfeilen 46 ausgekoppelt.

Anhand der Fig. 7 wird nachfolgend die Herstellung eines erfindungsgemässen Dekorelementes näher erläutert.

Die Fig. 7 zeigt einen Teil eines Spritzgusswerkzeuges 50, das einen ersten Werkzeugteil 51 und einen zweiten Werkzeugteil 52 aufweist, welche eine Kavität 53 bilden. Ansonsten ist das Spritzgusswerkzeug 50 wie an sich bekannt ausgebildet. Wenigstens eines der Werkzeugteile 51 und 52 ist somit beweglich, so dass die Kavität 53 geöffnet werden kann. In die geöffnete Kavität 53 wird ein Abdeckteil 54 eingelegt. Dieser Abdeckteil 54 kann jedoch auch im Spritzgusswerkzeug 50 gespritzt werden. Das Einspritzen erfolgt in an sich bekannter Weise durch eine Einspritzdüse 55 im zweiten Werkzeugteil 52. In der Kavität 53 ist mit Positionierstiften 58 ein Beleuchtungsmodul 80 positioniert. Diese Positionierstifte 58 sind lösbar am zweiten Werkzeugteil 52 befestigt. Die Stifte 58 greifen in einen Träger 59 ein, der beispielsweise eine Leiterplatte bzw. eine Platine ist. Das Beleuchtungsmodul 80 kann wie oben erläutert ausgebildet sein. Zwischen den beiden Werkzeugteilen 51 und 52 verläuft eine Trennebene 61, in welcher Anschlusskabel 60 für das Beleuchtungsmodul 80 verlaufen. Zum Herstellen des hier nicht gezeigten Lichtleiters wird durch die Einspritzdüse 55 in Richtung des Pfeiles 56 ein Kunststoff eingespritzt. Dieser gelangt in Richtung der Pfeile 57 in die Kavität 53. Das Beleuchtungsmodul 80 ist wie ersichtlich seitlich und somit im Abstand zur Einspritzdüse 55 am zweiten Werkzeugteil 52 befestigt. Der Kunststoff kann somit ungehindert in die Kavität 53 einströmen. Der eingeströmte Kunststoff umströmt das Beleuchtungsmodul 80 und bettet dieses damit vollständig ein. Durch die seitliche Anordnung des Beleuchtungsmoduls 80 wird dieses vergleichsweise schonend umspritzt, so dass das Leuchtmittel und auch elektronische Schaltungsteile nicht beschädigt werden. Der Spritzdruck wirkt selbstverständlich auch gegen den Abdeckteil 54. Dieser kann aufgrund dieses Spritzdruckes geformt werden, falls eine Struktur bzw. Verformung gewünscht ist. Der Abdeckteil 54 ist hierzu vorzugsweise ein Metallteil, beispielsweise aus Aluminium, das sich unter dem Spritzdruck plastisch verformen lässt.

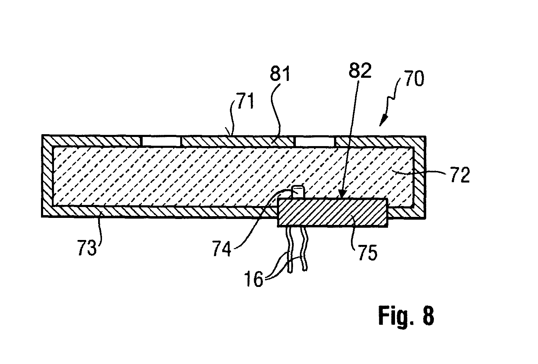

Anstelle einer Positionierung des Beleuchtungsmoduls 80 mittels Positionierstiften 58 könnte auch im zweiten Werkzeugteil 52 eine hier nicht gezeigte Vertiefung vorgesehen sein, in welche der Träger 59 des Beleuchtungsmoduls 80 eingesetzt und damit positioniert wird. Der Träger 59 wäre in diesem Fall nicht vollständig umspritzt. Ein entsprechend hergestelltes Dekorelement 70 wird nachfolgend anhand der Fig. 8 näher erläutert.

Das in Fig. 8 gezeigte Dekorelement 70 besitzt ein Abdeckteil 81, das eine Frontseite 71 bildet. An den Abdeckteil 81 ist ein Lichtleiter 72 angebracht, vorzugsweise angespritzt, der von einem Gehäuse 73 umgeben ist. Der Lichtleiter 72 ist an ein Beleuchtungsmodul 82 angespritzt, das ein umspritztes Leuchtmittel 74 sowie einen Träger 75 besitzt. Der Träger 75 ist wie ersichtlich lediglich teilweise in den Lichtleiter 72 eingebettet. Positioniermittel sind hier nicht vorhanden, da der Träger 75 wie oben erwähnt in einer Ausnehmung des Werkzeugteils 52 positioniert wurde. Das Gehäuse 73 könnte auch so ausgebildet sein, dass es den Träger 75 aussenseitig abdeckt.

### BEZUGSZEICHENLISTE

- 1: Dekorelement 34 Frontseite
- 2: Frontseite 35 Lichtleiter
- 3: Abdeckteil 36 Anschlusskabel
- 4: Teil 37 Gehäuse
- 5: Öffnung 38 beleuchtbarer Bereich
- 6: Rückseite 39 Dekorelement
- 7: Diffusor 40 Frontseite
- 8: Rückseite 41 Abdeckteil
- 9: Lichtleiter 42 Lichtleiter
- 10: Gehäuse 43 Leuchtmittel
- 11: Rückseite 44 Mikrostruktur
- 12: Innenseite 45 Gehäuse
- 13: Leuchtmittel 46 Pfeil
- 14: Träger 47 beleuchtbarer Bereich
- 15: Elektronik 50 Spritzgusswerkzeug
- 16: Anschlusskabel 51 erstes Werkzeugteil
- 17: Verbindungsteil 52 zweites Werkzeugteil
- 20: Dekorelement 53 Kavität
- 21: Frontseite 54 Abdeckteil
- 22: Abdeckteil 55 Einspritzdüse
- 23: Fenster 56 Pfeil
- 24: Lichtleiter 57 Pfeil
- 25: beleuchtbarer Bereich 58 Positionierstift
- 26: Gehäuse 59 Träger
- 27: Leuchtmittel 60 Anschlusskabel
- 28: Pfeil 61 Trennebene
- 29: Pfeil 70 Dekorelement
- 30: Reflexionsfläche 71 Frontseite
- 31: Innenseite 72 Lichtleiter
- 32: Dekorelement 73 Gehäuse
- 33: Abdeckteil 74 Leuchtmittel
- 75: Träger
- 76: Beleuchtungsmodul
- 77: beleuchtbarer Bereich
- 78: Beleuchtungsmodul
- 79: Beleuchtungsmodul
- 80: Beleuchtungsmodul
- 81: Abdeckteil
- 82: Beleuchtungsmodul
- 83: Pfeil

## Patentansprüche

1. Dekorelement mit einem Lichtleiter (9, 24, 35, 42, 72), der einen Körper aufweist, welcher dem Transport von Licht dient und in dem eingekoppeltes Licht wenigstens einmal die Fortpflanzungsrichtung ändert und in dem das eingekoppelte Licht in einem beleuchtbaren Bereich (25, 38, 47, 77) ausgekoppelt wird, mit einem Leuchtmittel (13, 27, 43, 74), mit dem Licht in den Lichtleiter (9, 24, 35, 42, 72) einkoppelbar ist, **dadurch gekennzeichnet, dass** der Lichtleiter (9, 24, 35, 42, 72) ein Spritzgussteil ist, der an wenigstens einem Teilbereich des Leuchtmittels (13, 27, 43, 74) und/oder an einem Abdeckteil (3, 22, 33, 41, 54) und/oder an einem Diffusor (7) angespritzt ist.

2. Dekorelement nach Anspruch 1, **dadurch gekennzeichnet, dass** es wenigstens ein punktförmiges Leuchtmittel (13, 27, 43, 74) aufweist.

3. Dekorelement nach Anspruch 1 oder 2, **dadurch gekennzeichnet, dass** das Leuchtmittel (13, 27, 43, 74) vom Lichtleiter ((9, 24, 35, 42, 72) im Wesentlichen vollständig umspritzt ist.

4. Dekorelement nach einem der Ansprüche 1 bis 3, **dadurch gekennzeichnet, dass** das Leuchtmittel (13, 27, 43, 74) auf einem Träger (14, 59, 75), beispielsweise auf einer Platine befestigt ist und dieser Träger (14, 59, 75) wenigstens teilweise in den Lichtleiter (9, 24, 35, 42, 72) eingebettet ist.

5. Dekorelement nach Anspruch 4, **dadurch gekennzeichnet, dass** der Träger (14, 59, 75) ebenfalls vom Lichtleiter (9, 24, 35, 42, 72) im Wesentlichen vollständig umspritzt ist.

6. Dekorelement nach einem der Ansprüche 1 bis 5, **dadurch gekennzeichnet, dass** das Leuchtmittel (13, 27, 43, 74) mit wenigstens einem Positionierelement (58), beispielsweise einem Positionierstift verbunden ist.

7. Dekorelement nach Anspruch 6, **dadurch gekennzeichnet, dass** wenigstens ein Positionierelement ein Teil eines weiteren Spritzgussteils (7) ist.

8. Dekorelement nach Anspruch 7, **dadurch gekennzeichnet, dass** das weitere Spritzgussteil ein Diffusor (7) ist und dass der Lichtleiter (9) an dieses weitere Spritzgussteil (7) angespritzt ist.

9. Dekorelement nach einem der Ansprüche 1 bis 8, **dadurch gekennzeichnet, dass** der Lichtleiter (9, 24, 35, 42, 72) plattenförmig ausgebildet ist.

10. Dekorelement nach einem der Ansprüche 1 bis 9, **dadurch gekennzeichnet, dass** es ein Gehäuse (10, 26, 45, 73) aufweist und dass dieses wenigstens am Lichtleiter (9, 24, 35, 42, 72) angespritzt ist.

11. Dekorelement nach Anspruch 10, **dadurch gekennzeichnet, dass** das Gehäuse (10, 26, 45, 73) an der Abdeckung (3, 22, 33, 41, 54) angespritzt ist.

12. Dekorelement nach einem der Ansprüche 1 bis 11, **dadurch gekennzeichnet, dass** die Abdeckung (3, 22, 33, 41, 54) wenigstens teilweise als Diffusor ausgebildet ist.

13. Dekorelement nach einem der Ansprüche 1 bis 12, **dadurch gekennzeichnet, dass** zum Auskoppeln des Lichtes lichtreflektierende Mittel (30, 44) vorgesehen sind, die beispielsweise als Folie, aufgedampfte Schicht oder Mikrostruktur ausgebildet sind, insbesondere ist vorgesehen, dass die lichtreflektierenden Mittel (30, 44) am Lichtleiter (9, 24, 35, 42, 72) vorgesehen sind.

14. Dekorelement nach einem der Ansprüche 1 bis 13, **dadurch gekennzeichnet, dass** es ein Element für eine Kraftfahrzeug, eine Einstiegsleiste oder eine Anzeige für ein Kraftfahrzeug, ein Schalter oder eine Schaltertaste oder ein beleuchtbares Element beispielsweise für ein Kraftfahrzeug oder ein Haushaltgerät oder dergleichen ist.

15. Dekorelement nach einem der Ansprüche 1 bis 14, **dadurch gekennzeichnet, dass** der Diffusor (7) ein Spritzgussteil ist.
